(19) Europäisches Patentamt

European Patent Office

Office européen des brevets

(11) **EP 1 298 161 B1**

(12) **EUROPÄISCHE PATENTSCHRIFT**

(45) Veröffentlichungstag und Bekanntmachung des Hinweises auf die Patenterteilung:
**03.08.2005   Patentblatt 2005/31**

(51) Int Cl.$^7$: **C08J 9/00**, H01B 3/46, C08J 9/32, C08L 83/04

(21) Anmeldenummer: **02020465.7**

(22) Anmeldetag: **12.09.2002**

(54) **Silikonkautschukzusammensetzung zur Herstellung von Kabeln bzw. Profilen**

Silicon rubber composition for making cables or profiles

Composition de caoutchouc silicone pour la fabrication de cables ou de profilés

(84) Benannte Vertragsstaaten:
**DE ES FR GB IT**

(30) Priorität: **20.09.2001   DE 10146392**

(43) Veröffentlichungstag der Anmeldung:
**02.04.2003   Patentblatt 2003/14**

(73) Patentinhaber: **Wacker-Chemie GmbH**
**81737 München (DE)**

(72) Erfinder:
• **Wolfer, Dietrich, Dr.**
**5110 St. Georgen-Oberndorf (AT)**
• **Marsch, Wilhelm**
**84533 Haiming (DE)**
• **Brennenstuhl, Werner, Dr.**
**84508 Burgkirchen (DE)**

(74) Vertreter: **Gössmann, Christoph et al**
**Wacker-Chemie GmbH,**
**Zentralbereich PML,**
**Hanns-Seidel-Platz 4**
**81737 München (DE)**

(56) Entgegenhaltungen:
EP-A- 0 971 369          EP-A- 1 070 746
DE-A- 19 502 128          US-A- 3 317 455

**Beschreibung**

Die Erfindung betrifft Zusammensetzungen von Siliconkautschukmassen, die im Brandfall den Funktionserhalt von damit isolierten Kabeln erhalten sowie ein Verfahren zu ihrer Herstellung.

Aus DE-OS- 19 855 912 und DE-OS 30 08 084 sind bereits keramifizierende Siliconzusammensetzungen bekannt, die Siliconkautschukmassen, Metalloxid und Platinverbindungen enthalten. Jedoch sind diese Siliconkautschukmassen für Hochfrequenzanwendungen nicht geeignet und weisen im Brandfall noch unzureichende Eigenschaften auf.

Aufgabe der Erfindung ist es, Siliconkautschuk als Kabelisoliermaterial zur Verfügung zu stellen, der die Nachteile des Standes der Technik überwindet.

Diese Aufgabe wird durch die Erfindung gelöst.

Gegenstand der Erfindung ist eine Zusammensetzung enthaltend peroxidisch vernetzenden oder kondensationsvernetzenden aber auch additionsvernetzenden Siliconkautschuk, Metalloxide aus der Gruppe Magnesiumoxid, Aluminiumoxid, Zinnoxid, Calciumoxid, Titanoxid, Bariumoxid und Metallverbindungen dieser Gruppe, bei denen bei Erhitzung Oxide entstehen, sowie Platinkomplexe mit zumindest einer ungesättigten Gruppe und Hohlkugeln.

Der erfindungsgemäße Siliconkautschuk ist vorzugsweise eine peroxidisch vernetzende Organopolysiloxanmasse, die vorzugsweise folgende Komponenten enthält.

In EP 1070746 A2 werden formbare Siliconkautschukschwamm-Zusammensetzungen beschrieben, die gas-haltige Hohlkörper enthalten und als mechanisch beanspruchbare Dichtungen Verwendung finden.

US 3,317,455 beschreibt ein Isolationsmaterial aus Organopolysiloxan, einem flüssigen Silicon, hohlen Kieselsäurekugeln und Natriumtitanfasern

EP 971 369 A1 beschreibt kompressible Siliconzusammensetzung aus formbaren Silicongel-Zusammensetzungen mit kompressiblen Hohlkörpern, die für elektrische Isolation verwendet werden.

Organopolysiloxane aus Einheiten der allgemeinen Formel

$$R_rSiO_{\frac{4-r}{2}} \qquad (I),$$

worin

R gleich oder verschieden sein kann und gegebenenfalls substituierter Kohlenwasserstoffrest bedeutet.

r 0, 1, 2 oder 3 ist und einen durchschnittlichen Zahlenwert von 1,9 bis 2,1 hat.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl- , Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R um Alkenylreste mit 2 bis 8 Kohlenstoffatomen, besonders bevorzugt um den Vinylrest.

Bei gegebenenfalls substituierten Kohlenwasserstoffresten mit 1 bis 8 Kohlenstoffatomen sind der Methyl-, Vinyl-, Phenyl- und 3,3,3-Trifluorpropylrest besonders bevorzugt.

Vorzugsweise sind an mindestens 70 Mol% der in dem Organopolysiloxan (A) aus Einheiten der Formel (I) enthaltenen Si-Atome Alkylreste, insbesondere Methylreste, gebunden. Enthalten die Organopolysiloxane neben Si-gebundenen Methyl- und/oder 3,3,3-Trifluorpropylresten noch Si-gebundene Vinyl- und/oder Phenylreste, so handelt es sich bei letzteren bevorzugt um Mengen von 0,001 - 30 Mol%.

Vorzugsweise bestehen die Organopolysiloxane (A) überwiegend aus Diorganosiloxaneinheiten. Die Endgruppen der Organopolysiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität zwischen $10^3$ und $10^8$ mm²/s auf.

Vorzugsweise werden als Vernetzer bei den erfindungsgemäßen Siliconkautschukmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Des weiteren wird als Vernetzer vorzugsweise ein Gemisch aus Bis-4-Methylbenzoylperoxid-(= PMBP) und 2,5-Dimethyl-hexan-2,5-di-tertiär-butylperoxid (=DHBP) im Verhältnis 1 : 0,4 bis 0,5 : 1, bevorzugt im Verhältnis 1:0,4, verwendet.

Des weiteren enthalten die erfindungsgemäßen Organopolysiloxane (A) vorzugsweise verstärkende und/oder nichtverstärkende Füllstoffe.

Beispiele für verstärkende Füllstoffe sind pyrogene oder gefällte Kieselsäuren mit BET-Oberflächen von mindestens 50 $m^2$/g.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan (A) gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststofffasern, eingesetzt werden. Die BET-Oberfläche dieser Füllstoffe liegt vorzugsweise unter 50 $m^2$/g.

Die erfindungsgemäßen, zu Elastomeren vernetzbaren Organopolysiloxanmassen enthalten Füllstoff (B) in Mengen von vorzugsweise 1 bis 200 Gewichtsteilen, besonders bevorzugt 30 bis 100 Gewichtsteilen, jeweils bezogen auf 100 Gewichtsteile Organopolysiloxan (A).

Der jeweiligen Anwendung entsprechend können den erfindungsgemäßen zu Elastomeren vulkanisierbaren Organopolysiloxanmassen Additive (C), wie beispielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (C) eingesetzt werden können, sind mit Trimethylsilylgruppen oder Hydroxygruppen terminierte Polydimethylsiloxane mit einer Viskosität von maximal 1000 $mm^2$/s bei 25°C oder auch Diphenylsilandiol.

Beispiele für Hitzestabilisatoren, die als Additive (C) eingesetzt werden können, sind Übergangsmetallfettsäuresalze, wie Eisenoctoat, Übergangsmetallsilanolate, wie Eisensilanolat, sowie Cer(IV)-Verbindungen.

Darüber hinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Des weiteren können als Silikonkautschukmassen auch übliche kondensationsvernetzende Organopolysiloxane, wie in z. B EP 0 359 251 beschrieben oder auch bekannte additionsvernetzende RTV-Massen oder HTV-Massen, wie in EP 0355459 B1 beschrieben, verwendet werden.

Beispiel der Herstellung eines additionsvernetzten HTV - Silikonkautschuks:
75 Teile eines durch Trimethylsiloxygruppen endblockierten Diorganopolysiloxans aus 99,7 Mol - % Dimethylsiloxaneinheiten und 0,3 Mol - % Vinylmethylsiloxaneinheiten mit einer Viskosität von 8 x 10^6 mPa.s bei 25°C sowie 25 Teile eines durch Trimethylsiloxygruppen endblockierten Diorganopolysiloxans aus 99,4 Mol - % Dimethylsiloxaneinheiten und 0,6 Mol - % Vinylmethylsiloxaneinheiten mit einer Viskosität von 8 x 10^6 mPa.s bei 25°C werden in einem bei 150°C betriebenen Kneter mit 45 Teilen pyrogen in der Gasphase erzeugten Siliciumdioxid mit einer BET - Oberfläche von 300 $m^2$/g und 7 Teilen eines in den endständigen Einheiten je eine Si-gebundene Hydroxylgruppe aufweisenden Dimethylpolysiloxans mit einer Viskosität von 40 mPa.s bei 25°C vermischt und zwei Stunden lang geknetet.

Des weiteren sind in der erfindungsgemäßen Zusammensetzung Metalloxide aus der Gruppe Magnesiumoxid, Aluminiumoxid, Zinnoxid, Calciumoxid, Titanoxid, Bariumoxid und Metallverbindungen dieser Gruppen, bei denen bei Erhitzung Oxide entstehen, wie zum Beispiel Hydroxide in Mengen von 1,5% bis 40 Gew.% immer bezogen auf das gesamte Gewicht der Zusammensetzung, vorzugsweise 10 bis 20 Gew.%. Es können auch ihre Mischungen verwendet werden.

Die erfindungsgemäßen Zusammensetzungen enthalten Platinkomplexe, die zumindest eine ungesättigte Gruppe aufweisen, wie vorzugsweise Platin-Olefin-Komplexe, Platin-Aldehyd-Komplexe, Platin-Keton-Komplexe, Platin-Vinylsiloxan-Komplexe, Platin-1,3-Divinyl-1,1,3,3-tetramethyldisiloxankomplexe mit oder ohne Gehalt an nachweisbarem organischem Halogen, Platin-Norbornadienmethylacetonatkomplexe, Bis-(gammapicolin)-platindichlorid, Trimethylendipyridinplatindichlorid, Dicyclopentadienplatindichlorid, Dimethylsulfoxydethylenplatin-(II)-dichlorid, Umsetzungsprodukte von Platintetrachlorid mit Olefin und primärem Amin oder sekundärem Amin oder primärem und sekundärem Amin, Umsetzungsprodukt aus in 1-Octen gelöstem Platintetrachlorid mit sec.-Butylamin, wobei der Platin-1,3-Divinyl-1,1,3,3-tetrametyhldisiloxankomplex besonders bevorzugt ist. Dieser Platinkomplex wird in Mengen von 5 bis 200 ppm, bevorzugt 10 bis 100 ppm zugesetzt, wobei die Menge auf reines Platin bezogen ist. Es können auch Mischungen der Platinkomplexe verwendet werden.

Bei den Hohlkugeln handelt es sich um Glashohlkugeln, Kieselglashohlkugeln, Metallhohlkugeln oder bevorzugt um Kunststoffhohlkugeln, die aus Elastomeren oder thermoplastischem Material bestehen.

Als Kunststoffhohlkörper werden als Bestandteil vorzugsweise Hohlkörper auf der Grundlage von organischem Polymermaterial, wie vorzugsweise Polyvinylchloride, Polyvinylacetate, Polyester, Polycarbonate, Polyethylene, Polystyrene, Polymethylmethacrylate, Polyvinylalkohole, Ethylcellulose, Nitrocellulose, Benzylzellulose, Epoxyharze, Hydroxypropylmethylcellulose-phthalat, Copolymere von Vinylchlorid und Vinylacetat, Copolymere von Vinylacetat und Celluloseacetatbutyrat, Copolymere von Styrol und Maleinsäure, Copolymere von Acrylonitril und Styrol, Copolymere von Vinylidenchlorid und Acrylnitril und ähnliche verwendet. Verfahren zur Herstellung derartiger Kunststoffhohlkörper sind bekannt, insbesondere werden derartige Verfahren in EP-B 348 372 (CASCO NOBEL AG) und den dort zitierten US-A 3,615,972, US-A 4,397,799 und EP-A-112807 beschrieben.

Vorzugsweise handelt es sich um expandierte und besonders bevorzugt um expandierbare Kunststoffhohlkörper mit einem Durchmesser von 1 bis 800 µm, bevorzugt von 5 - 100 µm und besonders bevorzugt von 10 bis 16 µm. Die Dichte beträgt an der Luft vorzugsweise 10 bis 100 kg/m$^3$, bevorzugt 20 bis 80 kg/m$^3$ und besonders bevorzugt 20 bis 60 kg/m$^3$. Ganz besonders bevorzugt sind die Kunststoffhohlkörper mit dem Handelsnamen Expancel 053, 091, 092 DU ein Produkt von Expancel Nobel Industries. Die expandierbaren Hohlkörper enthalten ein Treibgas wie z.B. Butan oder Isobutan. Diese Kunststoffhohlkörper werden in Mengen von vorzugsweise 2 bis 20 Gew.%, bevorzugt von 4 bis 12 Gew.% und besonders bevorzugt von 5 bis 8 Gew.%, bezogen auf die gesamte Zusammensetzung, verwendet.

Ein weiterer Gegenstand der Erfindung ist ein Verfahren zur Herstellung der erfindungsgemäßen Zusammensetzung, wobei alle oben genannten Komponenten vermischt werden.

Weitere Gegenstände der vorliegenden Erfindung sind Kabel und Profile, die die erfindungsgemäße Zusammensetzung enthalten. Bei den Kabeln handelt es sich vorzugsweise um Kommunikations- bzw. Energiekabel sowie um ein Kabel, bei dem die Hohlräume zwischen zumindest zwei isolierten Leitern mit der erfindungsgemäßen Zusammensetzung ausgefüllt sind.

Bei den Profilen handelt es sich um Silikonschäume oder Massiv-Dichtungen zur Brandabschottung von Räumen, Schränken und Tresoren sowie Ablationsmassen zur Auskleidung von Raketenmotoren etc. Des weiteren kann die erfindungsgemäße Silikonkautschukmasse als keramifizierender RTV-Schaum (bei Raumtemperatur vernetzender Schaum) verwendet werden.

Überraschenderweise ermöglicht die vorliegende Erfindung, dass bereits bei einer Temperatur von 650°C ein Sintervorgang einsetzt, der zur Bildung einer Keramikschicht aus den Verbrennungsprodukten von Silikonkautschuk führt. Dadurch können Silikonkautschukmischungen für Anwendungen, in denen Funktionserhalt im Brandfall gefordert wird, mit einer geringen Dichte (bevorzugt 0,41) und daher im Vergleich zu normalem keramifizierbarem Silikonkautschuk mit einer Dichte von 1,25 fast unverändertem Eigenschaftsniveau hinsichtlich mechanischen, elektrischen und Hitzealterungs-Eigenschaften hergestellt werden. Gegenüber den üblichen Silikonkautschukmassen wird überraschenderweise bei den erfindungsgemäßen Zusammensetzungen eine bessere thermische Isolation und eine höhere Isolationsfähigkeit vor allem im Temperaturbereich über 900°C erreicht. Die im Brandfall gebildete Keramik ist außerdem wesentlich schlag- und erschütterungsunempfindlicher als die im Stand der Technik beschriebenen Mischungen, die nur eine stabile Ascheschicht bilden. Des weiteren beträgt überraschenderweise die Dielektrizitätskonstante gegenüber üblichen Silikonkautschukmassen ohne Hohlkörper statt 2,7 nun 1,8. Dies macht den Einsatz von derartigen Silikonkautschukmassen auch im Hochfrequenzbereich möglich, insbesondere bei Antennenkabeln im Hochfrequenzbereich wie dem Mobilfunk.

**Beispiel 1**

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von 8 · 10$^6$ mPa · s bei 25°C werden in einem bei 150°C betriebenen Kneter zunächst mit 50 Teilen pyrogen in der Gaspase erzeugtem Siliciumdioxyd mit einer Oberfläche von 200 m$^2$/g, dann mit 1 Teil durch Trimethylsiloxygruppen endblockierten Dimethylpolysiloxan mit einer Viskosität von 96 mPa · s bei 25°C, dann mit 7 Teilen eines in den endständigen Einheiten je eine Si-gebundene Hydroxylgruppe aufweisenden Dimethylpolysiloxans mit einer Viskosität von 40 mPa · s bei 25°C, mit 36 Teilen Aluminiumoxid mit einer Korngröße > 10 µm mit einem Gehalt an Alkalioxiden < 0,5 Gew. % sowie 0,3 Gew.% eines Platin- 1,3-Divinyl-1,1,3,3-tetrametyhldisiloxankomplexes und 8 g Kunststoffhohlkugeln (aus einem Acrylnitrilcopolymer gefüllt mit Isobutan) vermischt.

**Vergleichsbeispiel 2**

Die in Beispiel 1 beschriebene Arbeitsweise wird wiederholt mit der Abänderung, dass kein Platinkomplex zugesetzt wird.

**Vergleichsbeispiel 3**

Die in Beispiel 2 beschriebene Arbeitsweise wird wiederholt mit der Abänderung, dass auch kein Aluminiumoxid zugesetzt wird.

**Vergleichsbeispiel 4**

Die in Beispiel 1 beschriebene Arbeitsweise wird wiederholt mit der Abänderung, dass keine Kunststoffhohlkugeln zugesetzt werden.

**Muster nach Beispiel 1:**

Nach Entzündung der Leitungsisolation bei ca. 420 °C verbrennt diese und bildet dabei eine feste, poröse Keramikschicht. Während der 2 Stunden bei 1100 °C wird die Spannungsbelastung von 500 Volt gehalten, ohne dass es zu einem Kurzschluss kommt. Eine Steigerung der Spannung auf 1000 Volt wird ohne Kurzschluss ausgehalten.

**Muster nach Vergleichsbeispiel 2:**

Nach Entzündung der Leitung bei 420 °C verbrennt diese und bildet dabei eine zusammenhaftende, poröse Ascheschicht, die aber in der Folge noch vor Erreichen von 930 °C abfällt, wodurch in Folge der thermischen Dilatation der Drähte es zu einer Berührung und dadurch zu einem Kurzschluss kommt.

**Muster nach Vergleichsbeispiel 3:**

Nach Entzündung der Leitung bei 420 °C verbrennt diese und bildet dabei eine pulverförmige, poröse Ascheschicht, die noch während des Brandes abfällt, kurz danach kommt es zu einem Kurzschluß.

**Muster nach Vergleichsbeispiel 4:**

Nach Entzünden der Leitungsisolation bei 420 °C verbrennt diese und bildet eine feste Keramikschicht. Während der 2 Stunden bei ca. 1000 °C wird die Spannungsbelastung von 500 Volt gehalten, ohne dass es zu einem Kurzschluss kommt. Während des Verbrennens der Isolation sind aber in der Keramikschicht durch die thermische Ausdehnung des Kupferleiters vereinzelt kleine Risse entstanden. Bei Steigerung der Spannung auf 1000 V kommt es zum Durchschlag und Kurzschluss.

**Patentansprüche**

1. Zusammensetzung, enthaltend peroxidisch vernetzenden oder kondensationsvernetzenden oder additionsvernetzenden Siliconkautschuk, Metalloxide aus der Gruppe Magnesiumoxid, Aluminiumoxid, Zinnoxid, Calciumoxid, Titanoxid, Bariumoxid und Metallverbindungen dieser Gruppe bei denen bei Erhitzung Oxide entstehen, sowie Platinkomplexe mit zumindest einer ungesättigten Gruppe und Hohlkugeln.

2. Zusammensetzung nach dem Anspruch 1, **dadurch gekennzeichnet, dass** der Platinkomplex ein Platinvinylsiloxankomplex ist.

3. Zusammensetzung nach Anspruch 2, **dadurch gekennzeichnet, dass** der Platinvinysiloxankomplex der Platin-1,3-Divinyl-1,1,3,3-tetramethyldisiloxankomplex ist.

4. Zusammensetzung nach einem der Ansprüche 1 bis 3, **dadurch gekennzeichnet, dass** die Hohlkugeln expandierbar sind.

5. Verfahren zur Herstellung einer Zusammensetzung nach einem der Ansprüche 1 bis 4, **dadurch gekennzeichnet, dass** die Komponenten vermischt werden.

6. Kabel, **dadurch gekennzeichnet, dass** die Isolation der Leiter eine Zusammensetzung nach einem der Ansprüche 1 bis 4 oder hergestellt nach Anspruch 5 enthält.

7. Kabel, **dadurch gekennzeichnet, dass** die Hohlräume zwischen zumindest zwei isolierten Leitern mit einer Zusammensetzung nach einem der Ansprüche 1 bis 4, oder hergestellt nach Anspruch 5, aufgefüllt sind.

8. Profil, **dadurch gekennzeichnet, dass** es eine Zusammensetzung nach einem der Ansprüche 1 bis 4, oder hergestellt nach Anspruch 5, enthält.

**Claims**

1. Composition comprising peroxidically crosslinking or condensation-crosslinking or addition-crosslinking silicone rubber, metal oxides selected from the class consisting of magnesium oxide, aluminium oxide, tin oxide, calcium oxide, titanium oxide and barium oxide and metal compounds of this class which produce oxides on heating, and also platinum complexes having at least one unsaturated group and hollow beads.

**2.** Composition according to Claim 1, **characterized in that** the platinum complex is a platinum-vinylsiloxane complex.

**3.** Composition according to Claim 2, **characterized in that** the platinum-vinylsiloxane complex is the platinum-1,3-divinyl-1,1,3,3-tetramethyldisiloxane complex.

**4.** Composition according to any one of Claims 1 to 3, **characterized in that** the hollow beads are expandable.

**5.** Process for preparing a composition according to any one of Claims 1 to 4, **characterized in that** the components are mixed.

**6.** Cable **characterized in that** the insulation of the conductors comprises a composition according to any one of Claims 1 to 4, or prepared as claimed in Claim 5.

**7.** Cable **characterized in that** the voids between at least two insulated conductors have been filled with a composition according to any one of Claims 1 to 4, or prepared according to Claim 5.

**8.** Profile **characterized in that** it comprises a composition according to any one of Claims 1 to 4, or prepared according to Claim 5.

**Revendications**

**1.** Composition contenant du caoutchouc siliconé réticulant au moyen de peroxydes ou réticulant par condensation ou réticulant par addition, des oxydes métalliques choisis dans le groupe des oxyde de magnésium, oxyde d'aluminium, oxyde d'étain, oxyde de calcium, oxyde de titane, oxyde de baryum et des composés métalliques de ce groupe dans lesquels se forment des oxydes en cas de chauffage, ainsi que des complexes de platine avec au moins un groupement insaturé et des sphères creuses.

**2.** Composition selon la revendication 1, **caractérisée en ce que** le complexe de platine est un complexe vinylsiloxane de platine.

**3.** Composition selon la revendication 2, **caractérisée en ce que** le complexe vinylsiloxane de platine est le complexe 1,3-divinyl-1,1,3,3-tétraméthyldisiloxane de platine.

**4.** Composition selon l'une quelconque des revendications 1 à 3, **caractérisée en ce que** les sphères creuses sont expansibles.

**5.** Procédé de préparation d'une composition selon l'une quelconque des revendications 1 à 4, **caractérisé en ce que** les composants sont mélangés.

**6.** Câble, **caractérisé en ce que** l'isolation des conducteurs contient une composition selon l'une quelconque des revendications 1 à 4 ou une composition préparée selon la revendication 5.

**7.** Câble, **caractérisé en ce que** les cavités présentes entre au moins deux conducteurs isolées sont remplies d'une composition selon l'une quelconque des revendications 1 à 4, ou d'une composition préparée selon la revendication 5.

**8.** Profilé, **caractérisé en ce qu'**il contient une composition selon l'une quelconque des revendications 1 à 4 ou une composition préparée selon la revendication 5.